# EUROPÄISCHE PATENTSCHRIFT

(11) **EP 2 912 595 B1**
(45) Veröffentlichungstag und Bekanntmachung des Hinweises auf die Patenterteilung: **27.02.2019**
(21) Anmeldenummer: 13779803.9
(22) Anmeldetag: 17.10.2013
(51) Int. Cl.: G06F 21/35, G06F 21/42, H04L 9/32, H04L 29/06

(54) **VERFAHREN ZUR ERZEUGUNG EINES SOFT-TOKENS, COMPUTERPROGRAMMPRODUKT UND DIENST-COMPUTERSYSTEM**
METHOD FOR PRODUCING A SOFT TOKEN, COMPUTER PROGRAM PRODUCT AND SERVICE COMPUTER SYSTEM
PROCÉDÉ DE GÉNÉRATION D'UN JETON LOGICIEL, PRODUIT DE PROGRAMME D'ORDINATEUR ET SYSTÈME INFORMATIQUE DE SERVICE

(30) Priorität: 26.10.2012 DE 102012219618
(43) Veröffentlichungstag der Anmeldung: 02.09.2015
(73) Patentinhaber: Bundesdruckerei GmbH, 10969 Berlin (DE)
(72) Erfinder: DIETRICH, Frank, 12437 Berlin (DE)
(74) Vertreter: Richardt Patentanwälte PartG mbB
(86) Internationale Anmeldenummer: PCT/EP2013/071749
(87) Internationale Veröffentlichungsnummer: WO 2014/063990

(56) Entgegenhaltungen:
- DE-A1-102009 027 686
- US-A1- 2010 199 086
- Martin -Schröder: "SAML Identity Federation und die eID-Funktionalität des nPA", , 13. Juni 2011 (2011-06-13), Seiten 1--46, XP055098472, Gefunden im Internet: URL:https://sar.informatik.hu-berlin.de/re search/publications/SAR-PR-2011-08/saml_.p df [gefunden am 2014-01-27]

## Beschreibung

Die Erfindung betrifft ein Verfahren zur Erzeugung eines Soft-Tokens, ein Computerprogrammprodukt, ein Dienst-Computersystem sowie ein Datenverarbeitungssystem.

Aus dem Stand der Technik ist die Verwendung von Soft-Token, die auch als Software-Token bezeichnet werden, für Authentisierungszwecke an sich bekannt. Ein Nachteil von Soft-Token ist, dass Kopien hiervon gemacht werden können. Dies stellte eine Angriffsmöglichkeit zum Missbrauch von Soft-Token dar.

Insbesondere sind aus dem Stand der Technik Soft-Token nach dem U-Prove-Standard bekannt, welche als U-Prove-Token bezeichnet werden. Ein solcher U-Prove-Token kann durch Hardware gesichert werden, indem der private Schlüssel eines U-Prove-Token zwischen zwei Geräten aufgeteilt wird (vgl. hierzu U-Prove-Technology Overview V1.1, Draft Revision 1, Microsoft Corporation 2011, Kapitel 6 auf Seite 18).

In DE 10 2011 082 101 ist ein Verfahren zur Erzeugung eines Softtokens offenbart. Das Verfahren beinhaltet die Verwendung eines Secure Elements.

Der Erfindung liegt demgegenüber die Aufgabe zugrunde, ein verbessertes Verfahren zur Erzeugung eines Soft-Tokens zu schaffen, sowie ein Computerprogrammprodukt, ein Dienst-Computersystem und ein Datenverarbeitungssystem.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da als Datenquelle für die Erzeugung des Soft-Tokens ein ID-Token eines Nutzers verwendet wird, und der Soft-Token kryptografisch an ein Secure Element desselben Nutzers gebunden wird, um auf diese Art und Weise ein Höchstmaß an Sicherheit zu gewährleisten bei gleichzeitig bequemer Handhabung.

Unter einem "Soft-Token" werden erfindungsgemäß insbesondere signierte Daten verstanden, welche zur Authentisierung eines Nutzers verwendet werden können, insbesondere U-Prove-Token. Insbesondere können die signierten Daten ein oder mehrere Attribute eines Nutzers beinhalten, welche von einer vertrauenswürdigen Instanz signiert sind.

Erfindungsgemäß wird unter einem "Secure Element" insbesondere eine Vorrichtung verstanden, die zumindest einen geschützten Speicherbereich aufweist, in dem Daten so gespeichert werden, dass sie gegen Manipulationen und Ausspähen geschützt sind, wie zum Beispiel eine Chipkarte, insbesondere eine Subscriber identity Module (SIM)-Karte, ein USB-Stick, ein Trusted Platform Module (TPM) oder ein anderes Gerät mit einem durch Hardware- und/oder Software-Maßnahmen geschützten Speicherbereich. Beispielsweise ist das Secure Element kartenförmig ausgebildet, sodass es ein Nutzer leicht mit sich führen kann.

Erfindungswesentlich ist nun, dass das Secure Element zur Herstellung einer lokalen Verbindung mit dem Nutzer-Computersystem ausgebildet ist, wobei es sich bei der lokalen Verbindung um eine bidirektionale ad hoc-Verbindung handelt. Hierzu kann das Secure Element neben einer standardmäßig vorhandenen Schnittstelle, wie z.B. einer kontaktbehafteten Schnittstelle für einen Chipkartenleser, eine zusätzliche Kommunikationsschnittstelle zur Herstellung der lokalen Verbindung aufweisen, wie z.B. eine Bluetooth oder NFC Schnittstelle, wobei diese zusätzliche Kommunikationsschnittstelle in das Secure Element integriert sein kann und mit diesem eine bauliche Einheit bildet.

Unter einer "ad hoc-Verbindung" wird hier eine Verbindung verstanden, welche zwei Endgeräte, hier das Nutzer-Computersystem und das Secure Element, selbstständig miteinander aufbauen, und zwar ohne feste Infrastruktur, insbesondere ohne Wireless Access Points.

Vorzugsweise handelt es sich bei der drahtlosen Verbindung um eine drahtlose Funkverbindung, insbesondere im Gigahertzbereich, insbesondere nach einem Bluetooth-Standard oder einem NFC-Standard.

Ausführungsformen der Erfindung sind besonders vorteilhaft, da geräte- und herstellerunabhängig eine universelle Lösung geschaffen wird, die es erlaubt, das Verfahren zur Erzeugung eines Softtokens herstellerunabhängig umzusetzen, da ein Nutzer-Computersystem, insbesondere in einer Ausführungsform als Smartphone, im Allgemeinen ohnehin über eine Bluetooth-Schnittstelle verfügt, die erfindungsgemäß für die Kommunikation zwischen Nutzer-Computersystem und Secure Element genutzt wird.

Nach Ausführungsformen der Erfindung erfolgt die Kommunikation zwischen dem Nutzer-Computersystem und dem Secure Element über die lokale Verbindung mit Ende-zu-Ende Verschlüsselung. Dies ist besonders vorteilhaft bei einer Funkverbindung, da so ein Abhören oder eine Manipulation der Kommunikation verhindert wird.

Erfindungsgemäß wird unter einer "kryptografisch gesicherten Verbindung" eine Verbindung verstanden, bei der die über die Verbindung übertragenen Daten verschlüsselt sind, um sie gegen Manipulationen und/oder Ausspähen, insbesondere Kopieren, zu schützen. Zum Aufbau einer kryptografisch gesicherten Verbindung kann ein asymmetrisches oder ein symmetrisches Verschlüsselungsverfahren eingesetzt werden, insbesondere ein Diffie-Hellman (DH)-Schlüsselaustausch.

Unter einem "Dienst-Computersystem" wird erfindungsgemäß insbesondere ein Computersystem verstanden, welches zur Erbringung eines Dienstes dient, nämlich die Erzeugung eines Soft-Tokens für einen Nutzer.

Unter einem "One Time Password" (OTP) wird erfindungsgemäß insbesondere ein Einmal-Passwort oder Einmal-Kennwort verstanden, welches zum Beispiel mit Hilfe eines Kennwort-Generators generiert wird. Ein OTP dient zur Authentifizierung und ist nur für einen einzigen Vorgang gültig, kann also kein zweites Mal benutzt werden. Zur Authentifizierung eines Nutzers muss dieser ein korrektes One Time Password eingeben.

Unter einem "Nutzer-Computersystem" wird erfindungsgemäß insbesondere ein Personal Computer (PC), Laptop-Computer oder ein anderer Computer eines Nutzers verstanden, wie z.B. ein elektronisches Gerät, welches die Funktionalität eines mobilen Computers aufweist, insbesondere ein Smartphone oder ein anderer portabler Computer.

Unter einem "ID-Token" wird erfindungsgemäß insbesondere ein tragbares elektronisches Gerät, wie zum Beispiel ein sogenannter USB-Stick, verstanden oder ein Dokument, insbesondere ein Wert- oder Sicherheitsdokument. Der ID-Token hat einen elektronischen Speicher, in dem zumindest ein Attribut gespeichert ist.

Unter einem "Dokument" werden erfindungsgemäß insbesondere papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Nach Ausführungsformen der Erfindung ist der Nutzer Inhaber eines ID-Tokens, wie zum Beispiel eines elektronischen Ausweisdokuments, insbesondere eines elektronischen Reisepass oder eines elektronischen Personalausweis. Außerdem verfügt der Nutzer über ein Secure Element, wie zum Beispiel eine Chipkarte. Das Secure Element hat einen geschützten Speicherbereich, in dem ein geheimer Schlüssel eines ersten asymmetrischen kryptografischen Schlüsselpaars gespeichert ist.

Zwischen einem elektronischen Gerät des Nutzers und einem Dienst-Computersystem wird eine erste kryptografisch gesicherte Verbindung aufgebaut, über welche der Nutzer die Erzeugung des Soft-Tokens anfordert.

Bei dem elektronischen Gerät kann es sich um ein mobiles Endgerät, insbesondere ein Mobilfunkgerät, ein Mobiltelefon, ein Smartphone, einen portablen Computer, ein Nutzer-Computersystem oder ein anderes mobiles batteriebetriebenes Endgerät mit einer Kommunikations-Schnittstelle zu dem Secure Element handeln.

Die Kommunikations-Schnittstelle ist zum Aufbau der lokalen Verbindung mit dem Secure Element ausgebildet. Besonders bevorzugt handelt es sich bei dem elektronischen Gerät um ein Mobiltelefon, insbesondere ein sogenanntes Smartphone, und bei dem Secure Element um eine Telekommunikations-Chipkarte, insbesondere eine SIM-Karte, die sich in einem integrierten Chipkarten-Lesegerät des elektronischen Gerätes befindet, und die zusätzlich eine Funkschnittstelle, beispielsweise eine Bluetooth und/oder NFC Schnittstelle hat, wobei über die zusätzliche Funkschnittstelle die lokale Verbindung aufgebaut wird.

Aufgrund des Empfangs der Anforderung für die Erzeugung des Soft-Tokens erzeugt das Dienst-Computersystem ein One Time Password mit Hilfe eines entsprechenden Kennwort-Generators und registriert das erzeugte One Time Password als Identifikator der ersten Verbindung für den Aufbau einer Session. Das One Time Password wird über die erste Verbindung an das elektronische Gerät des Nutzers übertragen und von dem elektronischen Gerät über eine Nutzer-Schnittstelle ausgegeben. Beispielsweise wird das One Time Password auf einem Display des elektronischen Geräts angezeigt, sodass ein Nutzer das One Time Password von dem Display ablesen kann.

Eine zweite kryptografisch gesicherte Verbindung wird zwischen dem Nutzer-Computersystem und dem Dienst-Computersystem aufgebaut. Der Nutzer gibt das über die Nutzer-Schnittstelle des elektronischen Geräts ausgegebene One Time Password in sein Nutzer-Computersystem ein, sodass dieses One Time Password von dem Nutzer-Computersystem an das Dienst-Computersystem über die zweite Verbindung übertragen wird. Unter der "Übertragung des One Time Passwords" wird hier auch verstanden, dass das Nutzer-Computersystem eine Kennung aus dem One Time Password nach einem vorgegebenen Algorithmus ableitet und diese Kennung und nicht zwangsläufig das One Time Password selbst über die zweite Verbindung übertragen wird.

Durch das Dienst-Computersystem erfolgt dann eine Prüfung, ob das registrierte und gesendete One Time Password mit dem empfangenen One Time Password bzw. mit der daraus abgeleiteten Kennung übereinstimmt. Nur wenn dies der Fall ist, wird zumindest ein Attribut aus dem ID-Token des Nutzers gelesen und der Soft-Token damit erzeugt, wobei auch der öffentliche Schlüssel des ersten kryptografischen Schlüsselpaars in die Erzeugung des Soft-Tokens mit eingeht. Der so erzeugte Soft-Token wird dann über die erste Verbindung an das elektronische Gerät und/oder über die zweite Verbindung an das Nutzer-Computersystem des Nutzers übertragen, .d.h. innerhalb der nun erfolgreich aufgebauten Session, die die ersten und zweiten Verbindungen beinhaltet.

Dies ist besonders vorteilhaft, da so einerseits sichergestellt ist, dass ein und derselbe Nutzer tatsächlich Inhaber sowohl des ID-Tokens als auch des Secure Elements ist und andererseits die Attribute, die in die Erzeugung des Soft-Tokens eingehen, auch tatsächlich zu diesem Nutzer gehören.

Nach einer Ausführungsform der Erfindung erfolgt die Anzeige des One Time Passwords auf dem Display des elektronischen Geräts bzw. des Nutzercomputersystems in Form eines maschinenlesbaren optischen Musters, insbesondere in Form eines ein- oder zweidimensionalen Barcodes oder als zweidimensionaler Strichcode, insbesondere als QR-Code. Die Eingabe des One Time Passwords durch den Nutzer kann dann so erfolgen, dass der Nutzer ein digitales Foto von dem maschinenlesbaren optischen Muster aufnimmt, beispielsweise durch eine in das elektronische Gerät bzw. das Nutzercomputersystem integrierte digitale Kamera. Das maschinenlesbare optische Muster wird dann automatisch decodiert, so dass sich die manuelle Eingabe des One Time Passwords durch den Nutzer erübrigt. Dies hat insbesondere den Vorteil, dass längere One Time Passwörter verwendet werden können, was die Sicherheit des erfindungsgemäßen Verfahrens weiter erhöht.

Nach einer Ausführungsform der Erfindung hat das Secure Element einen frei auslesbaren Speicherbereich, in dem ein öffentlicher Schlüssel des ersten Schlüsselpaars gespeichert ist. Dieser öffentliche Schlüssel wird von dem Secure Element an das elektronische Gerät über die lokale Verbindung übertragen, also nicht über eine Netzwerkverbindung, sondern beispielsweise über eine kontaktlose ad hoc Verbindung. Der öffentliche Schlüssel wird dann von dem elektronischen Gerät an das Dienst-Computersystem über die erste kryptografisch gesicherte Verbindung übertragen. Das von dem Dienst-Computersystem erzeugte One Time Password wird mit diesem öffentlichen Schlüssel verschlüsselt und das sich daraus ergebende Chiffrat wird über die erste Verbindung von dem Dienst-Computersystem an das elektronische Gerät übertragen.

Über die lokale Verbindung wird das verschlüsselte One Time Password dann von dem elektronischen Gerät an das Secure Element weitergeleitet, wo es mit Hilfe des geheimen Schlüssels entschlüsselt wird. Das entschlüsselte One Time Password wird dann von dem Secure Element an das elektronische Gerät über die lokale Verbindung übertragen, sodass das elektronische Gerät das One Time Password über seine Nutzer-Schnittstelle ausgeben kann.

Ausführungsformen der Erfindung sind besonders vorteilhaft, da der Soft-Token an das Secure Element kryptografisch gebunden ist, sodass der Soft-Token eine ähnliche oder dieselbe Vertrauenswürdigkeit wie der ID-Token aufweist, ohne dabei physisch an das Secure Element gebunden zu sein. Beispielsweise kann der Soft-Token auf dem Secure Element selbst, dem elektronischen Gerät des Nutzers, dem Nutzer-Computersystem oder in einem anderen elektronischen Speicher gespeichert sein, da für die Authentifizierung des Nutzers zusätzlich zu dem Soft-Token auch das Präsentieren des Secure Elements erforderlich ist, beispielsweise um in einem Challenge-Response-Protokoll nachzuweisen, dass das Secure Element in Besitz des privaten Schlüssels des ersten Schlüsselpaars ist, dessen öffentlicher Schlüssel in die Erzeugung des Soft-Tokens mit eingegangen ist. Eine solche Präsentierung des Soft-Tokens und des Secure Elements zum Zwecke der Authentifizierung des Nutzers kann zum Beispiel nach dem U-Prove-Protokoll erfolgen.

Nach einer Ausführungsform der Erfindung hat das Dienst-Computersystem eine erste Programmkomponente zur Erzeugung des One Time Passwords, zur Verschlüsselung des One Time Passwords und zur Erzeugung des Soft-Tokens. Insbesondere kann also die erste Programmkomponente einen Kennwort-Generator zur Erzeugung des One Time Passwords beinhalten. Das Dienst-Computersystem hat ferner eine zweite Programmkomponente zum Empfang des One Time Passwords von dem Nutzer-Computersystem, wobei die erste Verbindung zwischen dem elektronischen Gerät und der ersten Programmkomponente und die zweite Verbindung zwischen dem Nutzer-Computersystem und der zweiten Programmkomponente aufgebaut wird.

Nach einer Ausführungsform der Erfindung ist nutzerseitig nur das Nutzer-Computersystem vorhanden, ohne ein separates elektronisches Gerät. Beispielsweise kann es sich bei dem Nutzer-Computersystem um ein Smartphone handeln, welches sowohl die Funktionalitäten eines Nutzer-Computersystems als auch eines Mobiltelefons aufweist, wie zum Beispiel ein iPhone oder iPad. In diesem Fall wären die ersten und zweiten kryptografisch gesicherten Verbindungen beispielsweise als zwei verschiedene Sessions zwischen dem Dienst-Computersystem und dem Nutzer-Computersystem aufgebaut.

Nach einer Ausführungsform der Erfindung erfolgt das Lesen des zumindest einen Attributs aus dem ID-Token mit Hilfe eines ID-Provider-Computersystems.

Unter einem "ID-Provider-Computersystem" wird erfindungsgemäß insbesondere ein Computersystem verstanden, welches über ein Berechtigungszertifikat verfügt, in dem eine Berechtigung zum Lesen des zumindest einen Attributs aus dem ID-Token des Nutzers spezifiziert ist. Das ID-Provider-Computersystem kann beispielsweise gemäß DE 10 2008 000 067 A1, DE 10 2008 040 416, DE 10 2008 042 262, DE 10 2009 026 953, DE 10 2009 027 723, DE 10 2009 027 681 und/oder DE 10 2010 028 133.6 ausgebildet sein.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen. Insbesondere kann es sich um ein SSL Zertifikat oder ein TLS-Zertifikat handeln.

Unter einem "Berechtigungszertifikat" wird hier ein Zertifikat verstanden, das eine Spezifizierung von Zugriffsrechten auf in dem ID-Token gespeicherte Attribute beinhaltet. Ein Berechtigungszertifikat kann einen Verweis auf ein oder mehrere Zertifikate, insbesondere SSL- oder TLS-Zertifikate, beinhalten, welche dem Berechtigungszertifikat zugeordnet sind.

Ausführungsformen der Erfindung sind besonders vorteilhaft, da das zumindest eine Attribut aus einem besonders vertrauenswürdigen ID-Token, beispielsweise einem amtlichen Dokument, ausgelesen wird. Von besonderem Vorteil ist weiterhin, dass eine zentrale Speicherung der Attribute nicht erforderlich ist. Ausführungsformen der Erfindung ermöglichen also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung handelt es sich bei den ersten und zweiten kryptographisch gesicherten Verbindungen jeweils um Transport-Schichtverbindungen. Beispielsweise handelt es sich bei den ersten und zweiten Verbindungen jeweils um Transport-Layer-Security (TLS) oder Secure Sockets Layer (SSL)Verbindungen. Die dritte Verbindung mit Ende-Zu-Ende-Verschlüsselung zwischen dem ID-Token und dem ID-Provider-Computersystem wird hingegen auf einer höheren Schicht, wie z.B. einer Anwendungsschicht, aufgebaut.

Nach einer Ausführungsform der Erfindung erzeugt das Dienst-Computersystem ein Security Assurance Markup Language (SAML) Objekt, welches die Attributspezifikation der aus dem ID-Token auszulesenden Attribute und die Signatur des Dienst-Computersystems beinhaltet. Das SAML Objekt wird an das ID-Provider-Computersystem übertragen. Das ID-Provider-Computersystem beinhaltet eine SAML-Logik -Komponente, das heißt ein Computerprogramm zum Empfang und zur Verarbeitung von SAML-Objekten.

Nach einer Ausführungsform der Erfindung überträgt das ID-Provider-Computersystem das zumindest eine Attribut in Form eines SAML-Objekts an das Dienst-Computersystem, nachdem das ID-Provider-Computersystem das zumindest eine Attribut aus dem ID-Token gelesen und die gelesenen Attribute in dem zunächst von dem Dienst-Computersystem empfangenen SAML-Objekt gespeichert hat.

Nach einer Ausführungsform der Erfindung erfolgt die Erzeugung des Soft-Tokens durch das Dienst-Computersystem durch eine Blind Signature oder als U-Prove-Token.

Nach einer Ausführungsform der Erfindung können mehrere Soft-Token für dasselbe Secure Element erzeugt werden. Hierzu ist jedem der Soft-Token ein separates asymmetrisches kryptografisches Schlüsselpaar zugeordnet. Der geheime Schlüssel dieses weiteren Schlüsselpaars kann mit dem öffentlichen Schlüsselpaar des ersten Schlüsselpaars verschlüsselt zum Beispiel in einem Speicher des elektronischen Geräts gespeichert sein. Beispielsweise kann das Chiffrat des geheimen Schlüssels in dem Dateisystem des elektronischen Geräts gespeichert sein.

In einem weiteren Aspekt betrifft die Erfindung ein Computerprogrammprodukt, insbesondere ein digitales Speichermedium, auf dem ausführbare Programminstruktionen zur Durchführung eines erfindungsgemäßen Verfahrens gespeichert sind.

In einem weiteren Aspekt betrifft die Erfindung ein Dienst-Computersystem sowie ein Datenverarbeitungssystem, welches zumindest ein solches Dienst-Computersystem und ein ID-Provider-Computersystem aufweist. Die einzelnen funktionalen Komponenten dieser Computersysteme können dabei auf derselben oder unterschiedlichen Hardwareeinheiten, die zum Beispiel miteinander vernetzt sein können, realisiert sein. Zu dem Datenverarbeitungssystem kann auch das Secure Element gehören und/oder der ID-Token, das elektronische Gerät und/oder das Nutzer-Computersystem.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Datenverarbeitungssystems,
- Figur 2: ein Blockdiagramm einer zweiten Ausführungsform eines erfindungsgemäßen Datenverarbeitungssystems,
- Figur 3: ein Flussdiagramm einer Ausführungsform eines erfindungsgemäßen Verfahrens,
- Figur 4: ein UML-Diagramm einer weiteren Ausführungsform eines erfindungsgemäßen Verfahrens,
- Figur 5: ein Blockdiagramm einer weiteren Ausführungsform eines erfindungsgemäßen Datenverarbeitungssystems,
- Figur 6: ein Flussdiagramm eines Verfahrens zum Lesen des zumindest einen Attributs aus dem ID-Token,
- Figur 7: ein UML-Diagramm einer weiteren Ausführungsform eines erfindungsgemäßen Verfahrens.

Elemente der nachfolgenden Ausführungsformen die einander entsprechen, werden mit denselben Bezugszeichen gekennzeichnet.

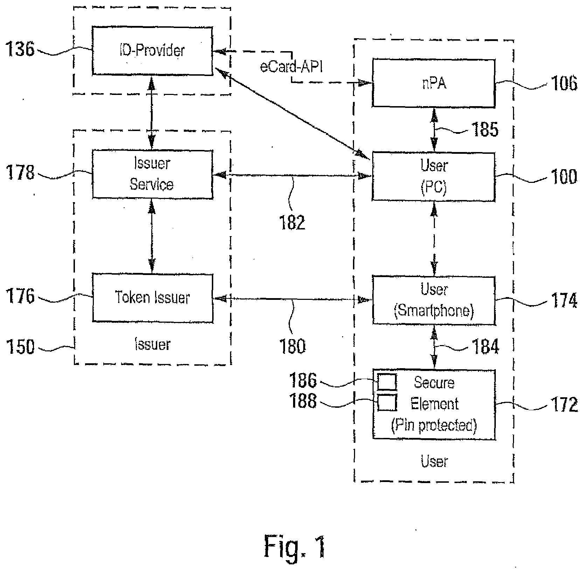

Die Figur 1 zeigt ein Datenverarbeitungssystem mit einem Nutzer-Computersystem 100 und einem ID-Token 106, wie zum Beispiel einem elektronischen Ausweisdokument, desselben Nutzers. Ein ID-Provider-Computersystem 136 dient zum Lesen von zumindest einem Attribut, welches in dem ID-Token gespeichert ist. Beispielsweise kann das ID-Provider-Computersystem 136 das eCard-API-Framework implementieren, wie es vom Bundesamt für Sicherheit in der Informationstechnik in der Technischen Richtlinie TR-03112 spezifiziert ist.

Ein Dienst-Computersystem 150 dient zur Erzeugung eines Soft-Tokens für den Nutzer. Dieser Soft-Token soll kryptografisch an ein Secure Element 172 desselben Nutzers gebunden sein. Der Austausch von Daten zwischen dem Dienst-Computersystem 150 und dem Secure Element 172 kann über ein elektronisches Gerät 174 des Nutzers erfolgen.

Dieses elektronische Gerät kann ein separates mobiles Endgerät sein, wie zum Beispiel ein Mobiltelefon, insbesondere ein Smartphone. Insbesondere, wenn das elektronische Gerät 174 als Smartphone ausgebildet ist, kann dieses auch die Funktion des Nutzer-Computersystems 100 wahrnehmen, sodass ein separates Nutzer-Computersystem 100 nicht erforderlich ist. Vielmehr werden dann die Funktionalitäten des Nutzer-Computersystems 100 und des elektronischen Geräts 174 durch ein und dasselbe Gerät des Nutzers wahrgenommen.

Das Dienst-Computersystem 150 kann eine erste Programmkomponente 176 aufweisen, welche zum Beispiel einen Kennwort-Generator zur Erzeugung eines One Time Passwords beinhaltet und welche zur Erzeugung des Soft-Tokens dient. Das Dienst-Computersystem 150 kann eine zweite Programmkomponente 178 aufweisen, welche insbesondere zum Empfang des One Time Password von dem Nutzer dient sowie auch zur Kommunikation mit dem ID-Provider-Computersystem 136.

Das Dienst-Computersystem 150 kann eine erste kryptografisch gesicherte Verbindung 180 zu dem elektronischen Gerät 174 und eine zweite kryptografisch gesicherte Verbindung 182 zu dem Nutzer-Computersystem 100 aufbauen, wie zum Beispiel zwischen der Programmkomponente 176 und dem elektronischen Gerät 174 bzw. der Programmkomponente 178 und dem Nutzer-Computersystem 100.

Die Kommunikation zwischen dem elektronischen Gerät 174 und dem Secure Element 172 erfolgt über eine lokale Verbindung 184, wie zum Beispiel über eine Bluetooth Schnittstelle des elektronischen Geräts 174; ebenso erfolgt die Kommunikation zwischen dem Nutzer-Computersystem und dem ID-Token 106 über eine solche lokale Verbindung 185.

Das Secure Element 172 hat einen geschützten Speicherbereich 186, in dem ein geheimer Schlüssel eines ersten asymmetrischen kryptografischen Schlüsselpaars gespeichert sein kann, welches dem Secure Element 172 zugeordnet ist. In einem frei lesbaren Speicherbereich 188 des Secure Elements 172 kann der dazugehörige öffentliche Schlüssel des ersten Schlüsselpaars gespeichert sein. Über die lokale Verbindung 184 kann eine zusätzliche Sicherheitsstufe dadurch realisiert werden, dass die Kommunikation zwischen dem elektronischen Gerät 174 und dem Secure Element 172 nach einem Secure-Messaging-Verfahren erfolgt, wozu das erste asymmetrische kryptografische Schlüsselpaar des Secure Elements 172 und ein weiteres asymmetrisches kryptografisches Schlüsselpaar zum Beispiel des elektronischen Geräts 174 verwendet werden kann.

Für eine besonders bequeme Handhabung kann das Secure Element zum Beispiel als Schlüsselanhänger oder als Aufkleber ausgebildet sein oder in ein Schmuckstück oder zum Beispiel in eine Armbanduhr integriert sein.

Zur Erzeugung eines kryptografisch an das Secure Element 172 gebundenen Soft-Tokens mit Hilfe des ID-Tokens 106 kann nun wie folgt vorgegangen werden:
Es werden die Verbindungen 180 und 182 aufgebaut. Der Nutzer gibt seine Anforderung zur Erzeugung des Soft-Tokens ein, sodass diese Anforderung über die Verbindung 180 zu dem Dienst-Computersystem 150 übertragen wird, beispielsweise zu der Programmkomponente 176. Daraufhin wird durch das Dienst-Computersystem 150 ein One Time Password generiert, welches über dieselbe Verbindung 180, über welche die Anforderung empfangen worden ist, an den Nutzer übertragen wird. Der Nutzer muss dann dieses One Time Password eingeben, sodass es über die andere Verbindung, das heißt die Verbindung 182, an das Dienst-Computersystem zurückübertragen wird. Wenn das durch das Dienst-Computersystem 150 erzeugte und das empfangene One Time Password bzw. eine daraus nutzerseitig abgeleitete Kennung übereinstimmen, so ist dadurch sichergestellt, dass die beiden Verbindungen 180 und 182 zu ein und demselben Nutzer bestehen.

Das Dienst-Computersystem 150 generiert daraufhin eine Attributspezifikation, in der spezifiziert ist, welche Attribute aus dem ID-Token 106 gelesen werden sollen. Diese Attributspezifikation wird von dem Dienst-Computersystem 150 an das ID-Provider-Computersystem 136 gesendet, welches daraufhin in an sich bekannter Weise die spezifizierten Attribute aus dem ID-Token 106 ausliest. Dies kann beispielsweise gemäß dem eCard-API-Framework erfolgen.

Das ID-Provider-Computersystem 136 antwortet dann auf die Attributspezifikation des Dienst-Computersystems 150 mit den ausgelesenen Attributen, welche zusammen mit dem öffentlichen Schlüssel des Secure Elements 172 in die Erzeugung des Soft-Tokens seitens des Dienst-Computersystems 150 eingehen. Dieser Soft-Token wird dann von dem Dienst-Computersystem über eine der Verbindungen 180 oder 182 an den Nutzer übertragen.

Beispielsweise kann die Erzeugung des Soft-Tokens nach dem U-Prove-Standard erfolgen. In diesem Fall fungiert das Dienst-Computersystem 150 als Issuer, wobei die eigentliche Erzeugung des U-Prove-Tokens durch die Programmkomponente 176 erfolgt. Durch die Programmkomponente 178 wird ein Issuer Service zur Verfügung gestellt, beispielsweise in Form einer Webseite, in die der Nutzer das One Time Password eingeben kann.

Von besonderem Vorteil ist hierbei, dass eine Zwischenspeicherung des Soft-Tokens nicht erforderlich ist, was die Sicherheit des Systems erhöht. Bei der Verwendung des U-Prove-Standards ist ein besonderer weiterer Vorteil, dass der Nutzer selbst spezifizieren kann, welche Daten er oder sie preisgeben möchte, und dass die Erstellung eines Profils, wie zum Beispiel über das Einkaufsverhalten des Nutzers, vermieden werden kann.

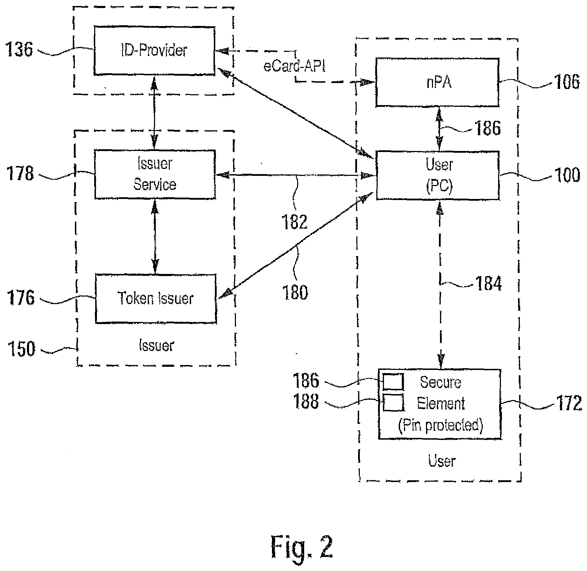

Die Figur 2 zeigt eine weitere Ausführungsform eines erfindungsgemäßen Datenverarbeitungssystems, wobei hier das Nutzer-Computersystem 100 auch die Funktionalität des elektronischen Geräts 174 wahrnimmt. Beide Verbindungen 180 und 182 werden also zu dem Nutzer-Computersystem 100 aufgebaut, wie zum Beispiel in zwei unterschiedlichen Sessions, die parallel zueinander laufen. Analog ist es auch möglich, dass die Funktionalität des Nutzer-Computersystems 100 durch das elektronische Gerät 174 wahrgenommen wird, insbesondere wenn es sich hierbei um ein sogenanntes Smartphone handelt.

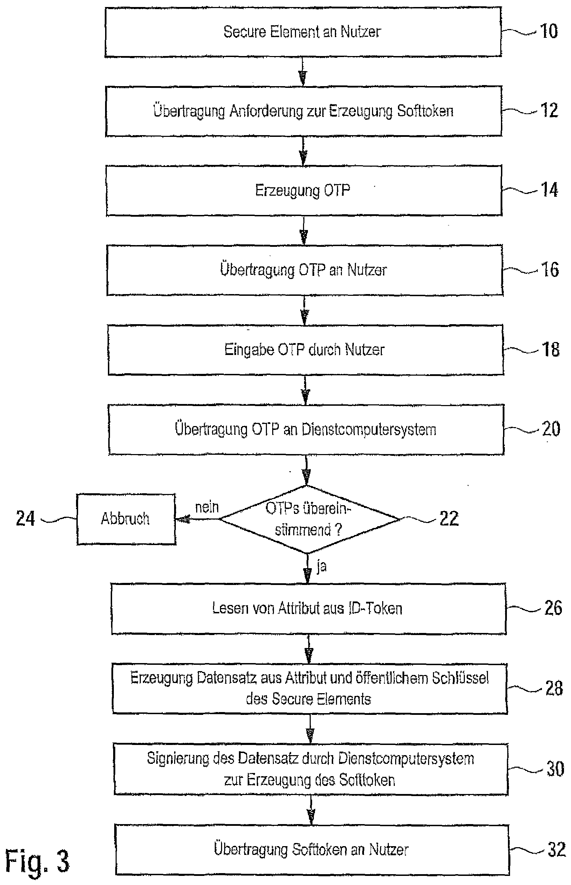

Die Figur 3 zeigt ein Flussdiagramm einer Ausführungsform eines erfindungsgemäßen Verfahrens.

In dem Schritt 10 wird dem Nutzer ein Secure Element zur Verfügung gestellt. Beispielsweise kann der Nutzer ein Secure Element, welches noch nicht für den Nutzer personalisiert ist, frei erwerben. Zur Erzeugung eines Soft-Tokens, insbesondere eines U-Prove-Tokens, welches an das Secure Element gebunden werden soll, wird wie folgt vorgegangen:
In dem Schritt 12 erfolgt die Übertragung einer Anforderung zur Erzeugung des Soft-Tokens von dem Nutzer an das Dienst-Computersystem, welches daraufhin in dem Schritt 14 ein One Time Password erzeugt. Dieses One Time Password wird in dem Schritt 16 von dem Dienst-Computersystem an den Nutzer übertragen und zwar über eine erste kryptographisch gesicherte Verbindung. Der Nutzer muss dieses empfangene One Time Password dann in dem Schritt 18 eingeben, sodass das One Time Password oder eine daraus nach einem vorgegebenen Algorithmus abgeleitete Kennung von dem Nutzer an das Dienst-Computersystem übertragen wird und zwar über eine zweite kryptographisch gesicherte Verbindung (Schritt 20). Das Dienst-Computersystem prüft dann in Schritt 22, ob das erzeugte One Time Password mit dem empfangenen One Time Password bzw. der daraus abgeleiteten Kennung übereinstimmt. Ist dies nicht der Fall, so wird in dem Schritt 24 abgebrochen.

Im gegenteiligen Fall werden anschließend in dem Schritt 26 ein oder mehrere Attribute aus dem ID-Token des Nutzers gelesen, um daraus in dem Schritt 28 einen Datensatz zu erzeugen, der auch den öffentlichen Schlüssel des Secure Elements enthält, welches dem Nutzer in dem Schritt 10 zur Verfügung gestellt worden ist.

In dem Schritt 30 wird dieser Datensatz von dem Dienst-Computersystem signiert, um dadurch den Soft-Token zu erzeugen. In dem Schritt 32 wird der Soft-Token an den Nutzer übertragen und zwar über die erste und/oder die zweite Verbindung.

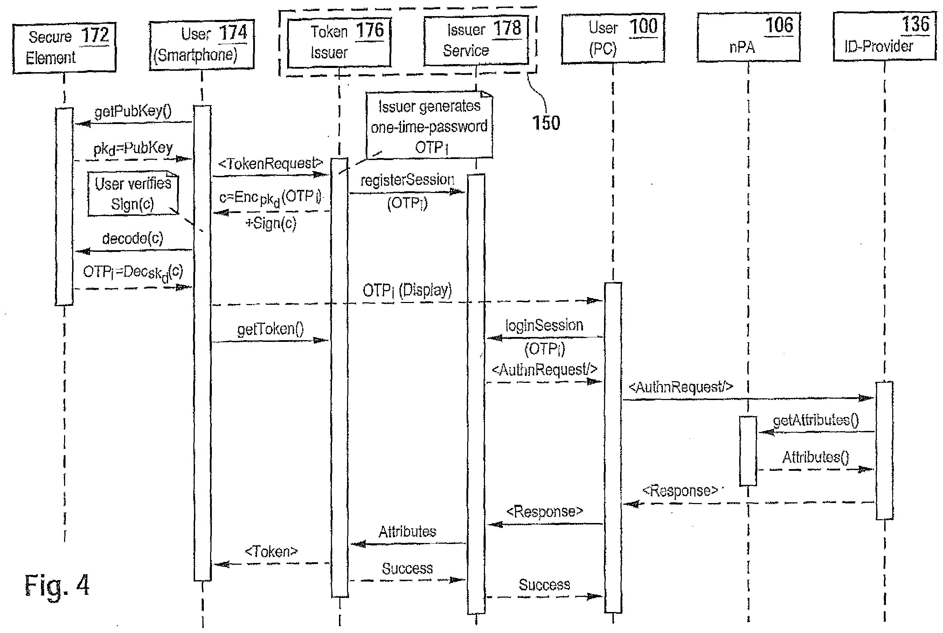

Die Figur 4 zeigt eine weitere Ausführungsform eines erfindungsgemäßen Verfahrens anhand eines UML-Diagramms.

Der Nutzer gibt in sein elektronisches Gerät 174 eine Anforderung für den öffentfichen Schlüssel des Secure Elements 172 ein, welcher in dem frei lesbaren Speicherbereich 188 des Secure Elements 172 gespeichert ist (vgl. Figur 1). Diese Anforderung "getPubKey()" wird von dem elektronischen Gerät 174 über die lokale Verbindung 184 an das Secure Element 172 übertragen.

Das Secure Element 172 liest daraufhin den öffentlichen Schlüssel des ihm zugeordneten ersten kryptografischen Schlüsselpaars aus dem Speicherbereich 188 aus und sendet diesen öffentlichen Schlüssel pk_{d} über die lokale Verbindung 184 an das elektronische Gerät 174.

Zwischen dem elektronischen Gerät 174 und dem Dienst-Computersystem 150, das heißt hier der Programmkomponente 176, wird die Verbindung 180 aufgebaut, über welche die Anforderung für den Soft-Token von dem elektronischen Gerät 174 an die Programmkomponente 176 übertragen wird. Über diese kryptografisch gesicherte Verbindung 180 wird auch der zuvor aus dem Secure Element 172 ausgelesene öffentliche Schlüssel von dem elektronischen Gerät 174 an die Programmkomponente 176 übertragen.

Die Programmkomponente 176 generiert daraufhin ein One Time Password OTPᵢ für diese über die Verbindung 180 empfangene Anforderung. Dieses OTPᵢ wird von der Programmkomponente 176 an die Programmkomponente 178 übertragen und von dieser Programmkomponente 178 registriert, das heißt temporär gespeichert - "registerSession (OTPᵢ)

Ferner wird das OTPᵢ von der Programmkomponente 176 mit Hilfe des öffentlichen Schlüssels pk_{d} verschlüsselt, was das Chiffrat c ergibt. Das Chiffrat c wird ferner von der Programmkomponente 176 digital signiert. Das Chiffrat c sowie dessen Signatur Sign(c) werden über die gesicherte Verbindung 180 zu dem elektronischen Gerät 174 übertragen.

Das elektronische Gerät 174 verifiziert dann die Signatur des Chiffrats c. Wenn die Signatur des Chiffrats c valide ist, richtet das elektronische Gerät 174 eine Anforderung zur Dekodierung des Chiffrats c an das Secure Element 172, das heißt die Anforderung "decode (c)". Das Secure Element 172 entschlüsselt c dann mit Hilfe des in dem geschützten Speicherbereich 186 gespeicherten geheimen Schlüssels und sendet das Ergebnis dieser Entschlüsselungsoperation, das heißt OTPᵢ über die lokale Verbindung 184 an das elektronische Gerät 174.

Das elektronische Gerät 174 zeigt daraufhin OTPᵢ auf seinem Display an und richtet ferner eine Anforderung "getToken()" an die Programmkomponente 176, um die Erzeugung des Soft-Tokens anzufordern. Der Nutzer kann das OTPᵢ von dem Display des elektronischen Geräts 174 ablesen und in das Nutzer-Computersystem 100 eingeben.

Anstelle einer manuellen Eingabe kann das OTPᵢ von dem Display des elektronischen Geräts 174 durch das Nutzercomputersystem 100 maschinell erfasst werden.

Beispielsweise wird das OTPᵢ auf dem Display des elektronischen Geräts 174 in Form eines maschinenlesbaren optischen Musters, beispielsweise in Form eines QR-Codes, angezeigt. Dieses maschinenlesbare optische Muster wird mithilfe einer digitalen Kamera des Nutzercomputersystems 100 durch Aufnahme eines digitalen Fotos erfasst und automatisch decodiert, um auf diese Art und Weise das OTPᵢ in das Nutzercomputersystem einzugeben. Die digitale Kamera kann an das Nutzercomputersystem angeschlossen oder ein integraler Bestandteil des Nutzercomputersystems 100 sein. Beispielsweise kann es sich bei dem Nutzercomputersystem 100 um einen Laptopcomputer mit einer in das Gehäuse integrierten Webcam handeln.

Das OTPᵢ wird über die zwischen dem Nutzer-Computersystem 100 und der Programmkomponente 178 aufgebaute sichere Verbindung 182 übertragen. Beispielsweise generiert die Programmkomponente 178 eine Webseite, die auf dem Nutzer-Computersystem 100 angezeigt wird, und in welche der Nutzer das OTPᵢ eingibt, um einen "Login" vorzunehmen.

Die Programmkomponente 178 vergleicht daraufhin das zuvor zwischengespeicherte OTPᵢ mit dem über die Verbindung 182 von dem Nutzer-Computersystem 100 empfangene OTPᵢ. Wenn eine Übereinstimmung vorliegt, richtet die Programmkomponente 178 daraufhin eine Authentisierungsanforderung "AuthnRequest/" an das ID-Provider-Computersystem 136, welche über die Verbindung 182 durch einen Redirect des Nutzer-Computersystems 100 an das ID-Provider-Computersystem 136 geleitet wird. Diese Authentifizierungsanforderung kann eine Attributspezifikation beinhalten, welche diejenigen Attribute spezifiziert, welche aus dem ID-Token 106 gelesen werden sollen, um in den Soft-Token einzugehen. Dies kann in Form eines SAML-Objekts erfolgen.

Das ID-Provider-Computersystem richtet ein Kommando zum Lesen der spezifizierten Attribute "get attributes ()" an den ID-Token 106 und erhält daraufhin diese Attribute, wenn das ID-Provider-Computersystem 136 die dafür erforderlichen Leserechte nachweisen kann. Die von dem ID-Provider-Computersystem 136 ausgelesenen Attribute werden dann signiert, und zum Beispiel in Form eines SAML-Objekts über das Nutzer-Computersystem 100 an die Programmkomponente 178 weitergeleitet.

Die Programmkomponente 178 übergibt intern in dem Dienst-Computersystem 150 die so empfangenen Attribute an die Programmkomponente 176. Die Programmkomponente 176 erzeugt daraufhin einen Datensatz, welcher die empfangenen Attribute sowie die aus dem Speicherbereich 188 gelesenen öffentlichen Schlüssel des Secure Elements 172 beinhaltet und signiert diesen digital. Das Ergebnis ist der angeforderte Soft-Token, der dann zum Beispiel über die Verbindung 180 an das elektronische Gerät 174 übertragen wird.

Entsprechend können für das Secure Element 172 weitere Soft-Token erzeugt werden, die jeweils unterschiedliche Attribute beinhalten. Hierzu kann so vorgegangen werden, dass für jedes der Soft-Token ein weiteres kryptografisches Schlüsselpaar zum Beispiel von dem elektronischen Gerät 174 erzeugt wird, wobei der geheime Schlüssel eines solchen weiteren Schlüsselpaars mit Hilfe des öffentlichen Schlüssels des Secure Elements 172, der aus dem Speicher 188 gelesen worden ist, verschlüsselt wird, um das Chiffrat des geheimen Schlüssels zum Beispiel in ein Dateisystem des elektronischen Geräts 174 abzuspeichern. Bei einer Präsentation des weiteren Soft-Token erfolgt dann eine Entschlüsselung dieses Chiffrats des geheimen Schlüssels durch das Secure Element 172, indem das Chiffrat über die lokale Verbindung 184 an das Secure Element 172 übertragen wird.

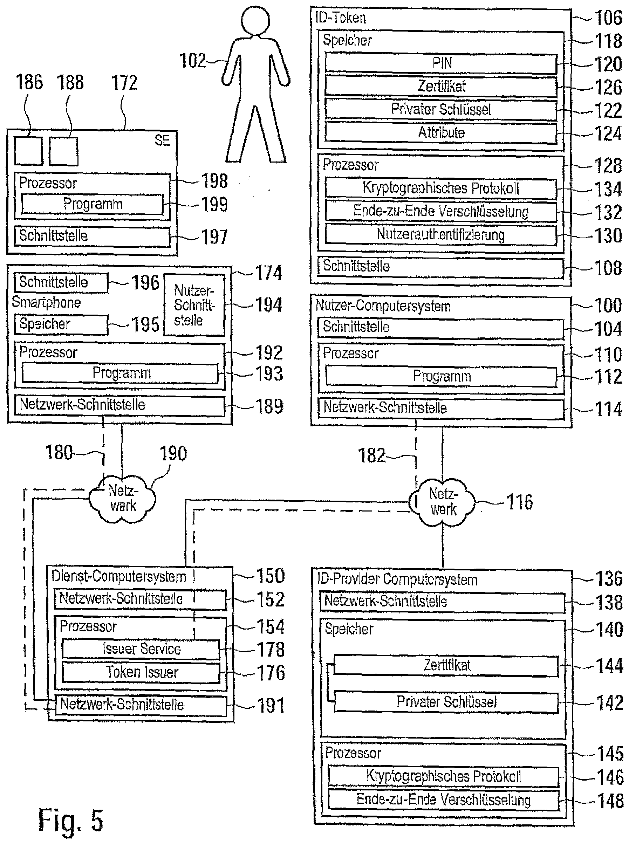

Die Figur 5 zeigt ein Blockdiagramm einer weiteren Ausführungsform eines erfindungsgemäßen Datenverarbeitungssystems.

Die Programminstruktionen 156 können bei der hier betrachteten Ausführungsform die Programmkomponenten 176 und 178 beinhalten.

Das elektronische Gerät 174 ist hier beispielsweise als Mobilfunkgerät, insbesondere als Smartphone, ausgebildet und hat eine Netzwerk-Schnittstelle 189 zu einem Mobilfunknetzwerk 190, welches beispielsweise nach dem GSM- oder UMTS-Standard arbeitet. Das Dienst-Computersystem 150 hat eine entsprechende Netzwerk-Schnittstelle 191 zu dem Mobilfunknetzwerk 190, sodass die Verbindung 180 über das Mobilfunknetzwerk 190 aufgebaut werden kann.

Das elektronische Gerät 174 hat ferner einen Prozessor 192 zur Ausführung von Programminstruktionen 193 sowie eine Nutzer-Schnittstelle 194, welche beispielsweise ein Display und eine Tastatur oder einen Touchscreen beinhaltet. Das elektronische Gerät 174 hat ferner einen elektronischen Speicher 195 sowie eine Schnittstelle 196 zum Aufbau der lokalen Verbindung 184 mit dem Secure Element 172, welches eine entsprechende Schnittstelle 197 aufweist. Das Secure Element 172 hat ferner einen Prozessor 198 zur Ausführung von Programminstruktionen 199. Zur Inanspruchnahme des Dienst-Computersystems 150, das heißt zur Generierung eines Soft-Tokens, wird entsprechend den Ausführungsformen gemäß Figuren 1 - 4 vorgegangen.

Beispielsweise gibt der Nutzer 102 über die Nutzer-Schnittstelle 194 des elektronischen Geräts 174 eine Anforderung zur Generierung des Soft-Tokens ein, woraufhin zunächst der öffentliche Schlüssel aus dem Speicherbereich 188 über die lokale Verbindung 184 ausgelesen wird. Durch Ausführung der Programminstruktionen 193 wird dann der "TokenRequest" zusammen mit diesem öffentlichen Schlüssel über die Verbindung 180 an die Programmkomponente 176 übertragen, welche daraufhin das OTPᵢ generiert, mit dem öffentlichen Schlüssel verschlüsselt und das signierte Chiffrat c über die Verbindung 180 an das elektronische Gerät 174 sendet.

Durch Ausführung der Programminstruktionen 193 wird die Signatur von c verifiziert und dann der Befehl "decode(c)" über die lokale Verbindung 184 an das Secure Element 172 gesendet. Dieses antwortet mit dem entschlüsselten OTPᵢ, welches durch Ausführung der Programminstruktionen 193 dann auf der Nutzer-Schnittstelle 194 angezeigt wird.

Der Nutzer 102 kann dann die Webseite der Programmkomponente 178 aufrufen, wozu die Verbindung 182 über das Netzwerk 116 zwischen der Programmkomponente 178 und dem Nutzer-Computersystem 100 aufgebaut wird. Der Nutzer 102 liest das OTPᵢ von dem Display der Nutzer-Schnittstelle 194 ab und gibt dieses OTPᵢ über die Tastatur des Nutzer-Computersystems 100 in die Webseite der Programmkomponente 178 ein. Wenn das erzeugte OTPᵢ und das auf diese Art und Weise empfangene OTPᵢ übereinstimmen, generiert die Programmkomponente 178 den Authentifizierungs-Request "AuthnRequest" (vgl. Figur 4). Dies löst bei der hier betrachteten Ausführungsform folgende Schrittfolge aus, um das zumindest eine Attribut aus dem ID-Token 106 zu lesen:
1. Authentifizierung des Nutzers 102 gegenüber dem ID-Token 106.
   Der Nutzer 102 muss sich gegenüber dem ID-Token 106 authentifizieren. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine dritte Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese dritte Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die dritte Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die dritte Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Der Umfang der Leserechte kann in dem Zertifikat 144 des ID-Provider-Computersystem 136 spezifiziert sein. Aufgrund eines entsprechenden Lesekommandos, welches das ID-Provider-Computersystem 136 über die dritte Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die dritte Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
   Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 mit Hilfe dieser Attribute das Softtoken erzeugen kann.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

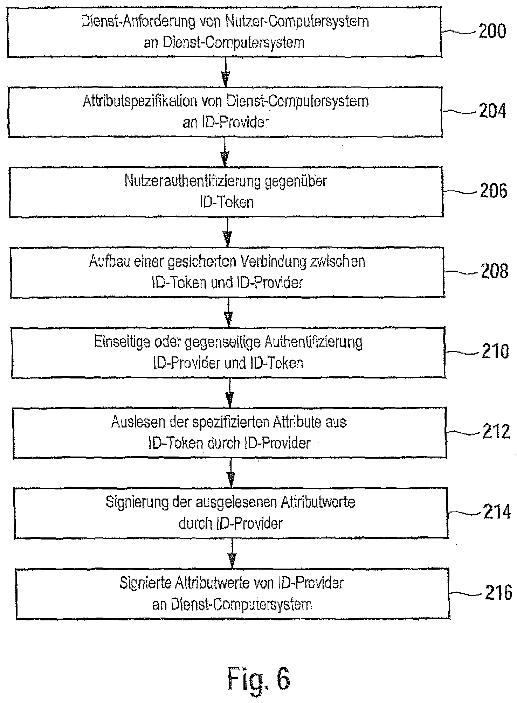

Die Figur 6 zeigt ein entsprechendes Verfahren zum Lesen des zumindest einen Attributs. In dem Schritt 200 wird eine Dienst-Anforderung zur Erzeugung des Soft-tokens von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, in der er oder sie die zu lesenden Attribute spezifizieren kann. Die Attributspezifikation kann auch fest vorgegeben sein.

In dem Schritt 204 wird die Attributspezifikation von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token,

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

Der Soft-Token kann zum Beispiel in dem Speicher 195 des elektronischen Geräts 174 gespeichert werden und/oder in dem Speicherbereich 188 des Secure Elements 172.

Zur Authentifizierung des Nutzers 102, zum Beispiel für eGovernment, eCommerce oder M-Commerce-Anwendungen oder für die Zwecke einer Zugangskontrolle, zum Beispiel zu einem Gebäude, kann der Nutzer 102 nunmehr das Secure Element 172 in Kombination mit dem Soft-Token verwenden, wobei aufgrund der kryptografischen Bildung des Soft-Tokens an das Secure Element 172 ein besonderes Maß an Sicherheit gegeben ist.

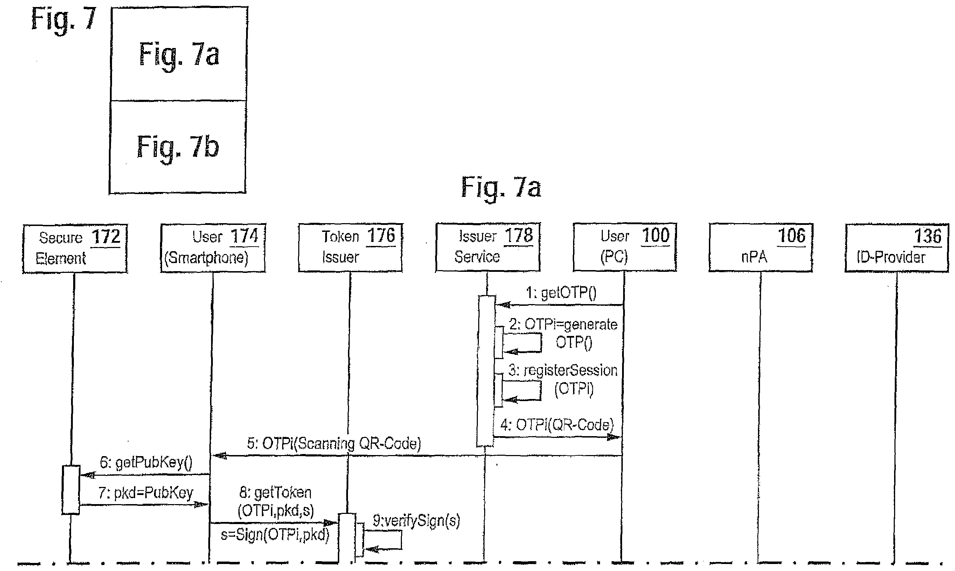

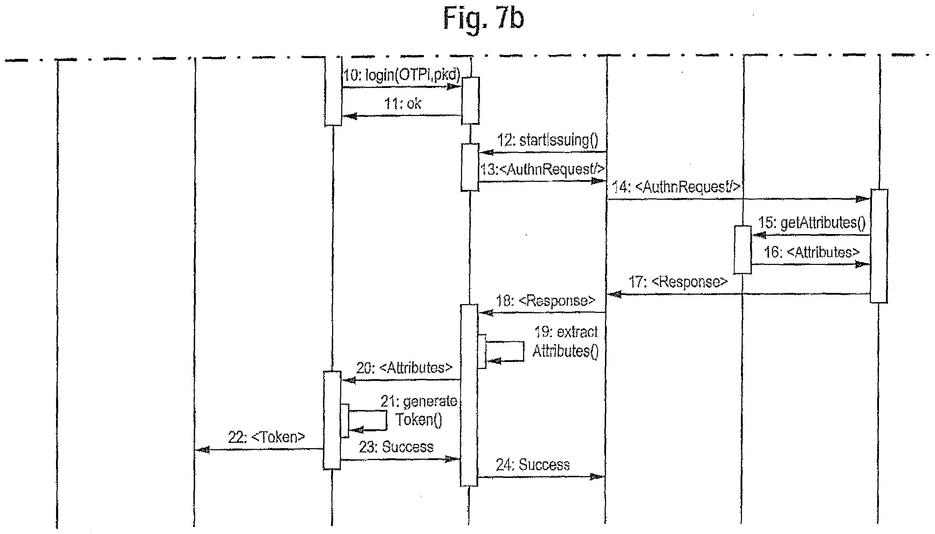

Die Fig. 7 zeigt eine weitere Ausführungsform der Erfindung, welche analog zu der Ausführungsform gemäß Fig. 4 ist, wobei hier die Durchführung des Verfahrens mithilfe des Nutzercomputersystems 100 initiiert wird. In dem Schritt 1 wird mithilfe des Nutzercomputersystems 100 in das Dienst-Computersystem 150, d.h. hier in die Programmkomponente 178, eine Anforderung zur Erzeugung des Soft-Tokens eingegeben, d.h. zunächst zur Erzeugung eines One Time Passwords zum Aufbau der hierfür erforderlichen Session. Dies ist in der Fig. 7 mit "getOTP()" bezeichnet. Die Eingabe der Anforderung in das Dienst-Computersystem 150 kann beispielsweise so erfolgen, dass mithilfe des Nutzercomputersystems 100 eine Webseite des Dienst-Computersystems 150 aufgerufen wird, in welche die entsprechende Anforderung des Nutzers über den Browser des Nutzercomputersystems 100 eingegeben wird. Beispielsweise wird hierzu zunächst die erste kryptographisch gesicherte Verbindung 180 aufgebaut und zwar bei der hier betrachteten Ausführungsform zwischen dem Nutzercomputersystem 100 und dem Dienst-Computersystem 150, um getOTP() über diese Verbindung 180 zu übertragen.

In dem Schritt 2 generiert das Dienst-Computersystem 150 das angeforderte One Time Password OTPᵢ. Der entsprechende One Time Password-Generator kann hier in der Programmkomponente 178 beinhaltet sein. Nachfolgend wird in dem Schritt 3 das OTPᵢ als Identifikator der zwischen dem Nutzercomputersystem 100 und dem Dienstcomputersystem 150 aufgebauten ersten kryptografisch gesicherten Verbindung 180 gespeichert, d.h. das OTPᵢ wird zum Aufbau einer Session registriert. In dem Schritt 4 wird das OTPᵢ dann über die erste kryptografisch gesicherte Verbindung 180 von dem Dienstcomputersystem 150 an das Nutzercomputersystem 100 übertragen, beispielsweise in Form eines QR-Codes.

Aufgrund des Empfangs des QR-Codes wird dieser auf dem Display des Nutzercomputersystems 100 angezeigt. Der Nutzer kann dann sein elektronisches Gerät 174 dazu verwenden, den auf dem Display des Nutzercomputersystems 100 angezeigten QR-Code maschinell zu erfassen. Hierzu kann ein in das elektronische Gerät 174 integrierter optischer Scanner oder eine digitale Kamera verwendet werden. Besonders vorzugsweise handelt es sich bei dem elektronischen Gerät 174 hier um ein Mobiltelefon, insbesondere ein Smartphone, mit einer integrierten digitalen Kamera, d.h. ein sogenanntes Foto-Handy. In diesem Fall kann der Nutzer den auf dem Display des Nutzercomputersystems 100 angezeigten QR-Code mit seinem Foto-Handy fotografieren.

Der mithilfe des elektronischen Geräts 174 optisch erfasste QR-Code wird dann durch Ausführung eines entsprechenden Programmmoduls durch das elektronische Gerät 174 decodiert, um auf diese Art und Weise den OTPᵢ in das elektronische Gerät 174 einzugeben (Schritt 5).

In dem Schritt 6 fordert dann das elektronische Gerät 174 den öffentlichen Schlüssel von dem Secure Element 172 an und erhält diesen öffentlichen Schlüssel in dem Schritt 7 analog zu den ersten beiden in der Fig. 4 gezeigten Schritten. Ferner wird der OTPᵢ von dem elektronischen Gerät 174 an das Secure Element 172 übertragen. Das Secure Element 172 erzeugt eine Signatur s des OTPᵢ und übergibt diese Signatur s an das elektronische Gerät 174.

In dem Schritt 8 wird die zweite kryptografisch gesicherte Verbindung 182 zwischen dem elektronischen Gerät 174 und dem Dienstcomputersystem 150 aufgebaut. In dem Schritt 8 wird ferner von dem elektronischen Gerät 174 an das Dienstcomputersystem 150, d.h. hier die erste Programmkomponente 176, ein Signal über die Verbindung 182 gesendet, um ein Kommando getToken(OTPᵢ,pkd,s) zu übertragen. Mit diesem Signal wird die Erzeugung des Soft-Tokens angefordert, wobei zusammen mit dieser Anforderung das OTPᵢ, der öffentliche Schlüssel des Secure Elements 172 pkd sowie die Signatur s übertragen werden.

In dem Schritt 9 wird durch die Programmkomponente 176 die Signatur s mithilfe des öffentlichen Schlüssels pkd verifiziert. Falls die Verifikation erfolgreich ist, wird in dem Schritt 10 das OTPᵢ und vorzugsweise auch der öffentliche Schlüssel pkd von der Programmkomponente 176 an die Programmkomponente 178 übertragen und von der Programmkomponente 178 mit dem registrierten OTPᵢ verglichen. Ferner wird der öffentliche Schlüssel pkd in dem Dienstcomputersystem 150, d.h. beispielsweise von der Programmkomponente 178 gespeichert, um diesen nachfolgend in dem Schritt 21 für die Erzeugung des Soft-Tokens verwenden zu können. Beispielsweise erfolgt die Speicherung des öffentliche Schlüssel pkd mit dem OTPᵢ als Identifikator, um den öffentliche Schlüssel pkd der Session zuzuordnen.

Bei Übereinstimmung des über die zweite Verbindung von dem elektronischen Gerät 174 an das Dienstcomputersystem 150 empfangenen und in dem Schritt 10 in die Programmkomponente 178 eingegebenen OTPᵢ mit dem zuvor registrierten OT-Pᵢ ist die Session erfolgreich aufgebaut worden und der nachfolgende Lesezugriff auf den ID-Token 106 kann durchgeführt werden. Hierzu kann es erforderlich sein, dass der Nutzer in dem Schritt 12 eine entsprechende Bestätigung in das Dienstcomputersystem 150 eingibt. Die nachfolgenden Schritte 13 bis 18 sind analog zu den entsprechenden Schritten der Fig. 4.

In dem Schritt 19 werden die Attribute aus der Antwort des ID-Provider-Computersystems 136 durch die Programmkomponente 178 gelesen und in dem Schritt 20 an die Programmkomponente 176 übergeben. Die Programmkomponente 176 generiert dann mithilfe dieser Attribute und dem in dem Schritt 8 empfangenen öffentlichen Schlüssel pkd den Soft-Token und überträgt in dem Schritt 22 den Soft-Token z.B. über die zweite Verbindung an das elektronische Gerät 174. In den Schritten 23 und 24 erfolgt eine Benachrichtigung des Nutzercomputersystems 100 hinsichtlich der erfolgreichen Erzeugung des Soft-Tokens.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 172: Secure Element
- 174: elektronisches Gerät
- 176: erste Programmkomponente
- 178: zweite Programmkomponente
- 180: erste kryptografisch gesicherte Verbindung
- 182: zweite kryptografisch gesicherte Verbindung
- 184: lokale Verbindung
- 185: lokale Verbindung
- 186: geschützter Speicherbereich
- 188: frei lesbarer Speicherbereich
- 189: Netzwerk-Schnittstelle
- 190: Mobilfunknetzwerk
- 191: Netzwerk-Schnittstelle
- 192: Prozessor
- 193: Programminstruktionen
- 194: Nutzer-Schnittstelle
- 195: Speicher
- 196: Schnittstelle
- 197: Schnittstelle
- 198: Prozessor
- 199: Programminstruktionen

## Patentansprüche

1. Verfahren zur Erzeugung eines Soft-Tokens mit folgenden Schritten:
- Zurverfügungstellung eines Secure Elements (172), wobei in einem geschützten Speicherbereich (186) des Secure Elements ein geheimer Schlüssel eines ersten asymmetrischen kryptografischen Schlüsselpaars gespeichert ist,
- Aufbau einer ersten kryptografisch gesicherten Verbindung (180) zwischen einem elektronischen Gerät (174; 100) und einem Dienst-Computersystem (150),
- Übertragung einer Anforderung zur Erzeugung des Soft-Tokens von dem elektronischen Gerät an das Dienst-Computersystem über die erste Verbindung,
- Erzeugung eines One Time Password aufgrund des Empfangs der Anforderung durch das Dienst-Computersystem,
- Registrierung des One Time Passwords als Identifikator der ersten Verbindung durch das Dienst-Computersystem,
- Übertragung des One Time Password von dem Dienst-Computersystem an das elektronische Gerät über die erste Verbindung,
- Ausgabe des One Time Password über eine Nutzer-Schnittstelle (194) des elektronischen Geräts,
- Aufbau einer zweiten kryptografisch gesicherten Verbindung (182) zwischen einem Nutzer-Computersystem (100; 174) und dem Dienst-Computersystem,
- Eingabe des One Time Passwords in das Nutzer-Computersystem,
- Übertragung des eingegebenen One Time Passwords von dem Nutzer-Computersystem an das Dienst-Computersystem über die zweite Verbindung,
- Prüfung durch das Dienst-Computersystem, ob das registrierte One Time Password mit dem über die zweite Verbindung empfangenen One Time Password übereinstimmt, und nur wenn dies der Fall ist, Lesen von zumindest einem in einem ID-Token (106) gespeicherten Attribut, Erzeugung des Soft-Tokens durch Signierung des zumindest einen Attributs und des öffentlichen Schlüssels des ersten kryptografischen Schlüsselpaars, Übertragung des Soft-Tokens über die erste Verbindung an das elektronische Gerät und/oder Übertragung des Soft-Tokens über die zweite Verbindung an das Nutzer-Computersystem, wobei eine lokale Verbindung (184) zwischen dem Nutzer-Computersystem und dem Secure Element aufgebaut wird, wobei es sich bei der lokalen Verbindung um eine bidirektionale ad hoc-Verbindung handelt.

2. Verfahren nach Anspruch 1, wobei in einem frei lesebaren Speicherbereich (188) des Secure Element ein öffentlicher Schlüssel des ersten Schlüsselpaars gespeichert ist, mit folgenden weiteren Schritten:
- Übertragung des öffentlichen Schlüssels von dem Secure Element an das elektronische Gerät über die lokale Verbindung (184),
- Übertragung des öffentlichen Schlüssels von dem elektronischen Gerät an das Dienst-Computersystem über die erste kryptografisch gesicherte Verbindung,
- Verschlüsselung des One Time Passwords durch das Dienst-Computersystem mit dem öffentlichen Schlüssel, wobei das verschlüsselte One Time Password über die erste Verbindung von dem Dienst-Computersystem an das elektronische Gerät übertragen wird,
- Übertragung des verschlüsselten One Time Passwords von dem elektronischen Gerät an das Secure Element über die lokale Verbindung,
- Entschlüsselung des One Time Password durch das Secure Element mit dem geheimen Schlüssel des ersten Schlüsselpaars,
- Übertragung des entschlüsselten One Time Passwords von dem Secure Element an das elektronische Gerät über die lokale Verbindung zur Ausgabe durch das elektronische Gerät.

3. Verfahren nach Anspruch 1 oder 2, wobei das Dienst-Computersystem eine erste Programmkomponente (176) zur Erzeugung des One Time Password, zur Verschlüsselung des One Time Password und zur Erzeugung des Soft-Tokens aufweist, sowie eine zweite Programmkomponente (178) zum Empfang des One Time Password von dem Nutzer-Computersystem, wobei die erste Verbindung zwischen dem elektronischen Gerät und der ersten Programmkomponente und die zweite Verbindung zwischen dem Nutzer-Computersystem und der zweiten Programmkomponente aufgebaut wird, mit folgenden weiteren Schritten:
- Übertragung des One Time Password von der ersten Programmkomponente zu der zweiten Programmkomponente, wobei die zweite Programmkomponente die Prüfung vornimmt, ob das von der ersten Programmkomponente empfangene One Time Password mit dem von dem Nutzer-Computersystem über die zweite Verbindung empfangene One Time Password übereinstimmt,
- Empfang des zumindest einen aus dem ID-Token gelesenen Attributs durch die zweite Programmkomponente,
- Übertragung des zumindest einen Attributs von der zweiten Programmkomponente an die erste Programmkomponente.

4. Verfahren nach einem der vorhergehenden Ansprüche, wobei zum Lesen des zumindest einen Attributs aus dem ID-Token die folgenden weiteren Schritte durchgeführt werden:
- Authentifizierung des Nutzers (102) gegenüber dem ID-Token,
- Authentifizierung eines ID-Provider-Computersystems (136) gegenüber dem ID-Token,
- nach erfolgreicher Authentifizierung des Nutzers und des ID-Provider-Computersystems gegenüber dem ID-Token, Lesezugriff des ID-Provider-Computersystems auf das zumindest eine in dem ID-Token gespeicherte Attribut über eine dritte Verbindung, Übertragung des zumindest einen Attributs von dem ID-Provider-Computersystem an das Dienst-Computersystem, wobei die dritte Verbindung zwischen dem ID-Token und dem ID-Provider-Computersystem über das Nutzer-Computersystem mit Ende-zu-Ende-Verschlüsselung aufgebaut wird.

5. Verfahren nach Anspruch 4, wobei das zumindest eine Attribut von dem ID-Provider-Computersystem signiert wird und über das Nutzer-Computersystem an das Dienst-Computersystem übertragen wird.

6. Verfahren nach Anspruch 5, wobei das ID-Provider-Computersystem das zumindest eine Attribut in Form eines SAML-Objekts an das Dienst-Computersystem überträgt.

7. Verfahren nach einem der vorhergehenden Ansprüche, wobei der Soft-Token von dem Dienst-Computersystem durch eine Blind Signature oder als U-Prove-Token erzeugt wird.

8. Verfahren nach einem der vorhergehenden Ansprüche, wobei dem Soft-Token ein zweites asymmetrisches kryptografisches Schlüsselpaar zugeordnet ist, wobei der geheime Schlüssel des zweiten Schlüsselpaars mit dem öffentlichen Schlüssel des ersten Schlüsselpaars verschlüsselt in einem Speicher (195) des elektronischen Geräts gespeichert ist.

9. Verfahren nach einem der vorhergehenden Ansprüche, wobei das elektronische Gerät als Computersystem (100), insbesondere als PC, ausgebildet ist, und wobei das Nutzer-Computersystem als mobiler Computer (174), insbesondere als Smartphone, ausgebildet ist, wobei in einem frei lesbaren Speicherbereich (188) des Secure Elements ein öffentlicher Schlüssel des ersten Schlüsselpaars gespeichert ist, mit folgenden weiteren Schritten:
- Übertragung des öffentlichen Schlüssels von dem Secure Element an den mobilen Computer (174) über die lokale Verbindung (184),
- Übertragung des öffentlichen Schlüssels und des eingegebenen One Time Passwords von dem mobilen Computer (174) an das Dienstcomputersystem über die zweite kryptografisch gesicherte Verbindung.

10. Verfahren nach einem der vorhergehenden Ansprüche, wobei die Ausgabe des One Time Passwords durch Anzeige eines maschinenlesbaren optischen Musters auf einem Display erfolgt, und wobei die Eingabe des One Time Passwords durch maschinelle Erfassung des optischen Musters erfolgt.

11. Verfahren nach Anspruch 10, wobei zum Aufbau der drahtlosen Funkverbindung nach dem Bluetooth-Standard ein pairing zwischen dem Nutzer-Computersystem und dem Secure Element erfolgt.

12. Computerprogrammprodukt, insbesondere digitales Speichermedium, mit ausführbaren Programminstruktionen zur Durchführung eines Verfahrens nach einem der vorhergehenden Patentansprüche.

13. Computersystem zur Erzeugung eines an ein Secure Element (172) gebundenen Soft-Token mit:
- Mitteln (154, 176, 191) zum Aufbau einer ersten kryptografisch gesicherten Verbindung (180) zu einem elektronischen Gerät (174),
- Mitteln (154, 176, 191) zum Empfang einer Anforderung zur Erzeugung des Soft-Tokens von dem elektronischen Gerät über die erste Verbindung,
- Mitteln (154, 176) zur Erzeugung eines One Time Passwords aufgrund des Empfangs der Anforderung,
- Mitteln (154, 176, 191) zur Übertragung des One Time Passwords über die erste Verbindung an das elektronische Gerät,
- Mitteln (152, 154, 178) zum Aufbau einer zweiten kryptografisch gesicherten Verbindung (182) zu einem Nutzer-Computersystem (100),
- Mitteln (152, 154, 178) zum Empfang des One Time Password von dem Nutzer-Computersystem über die zweite Verbindung,
- Mitteln (154, 178) zur Prüfung, ob das generierte One Time Password mit dem empfangenen One Time Password übereinstimmt,
- Mitteln (152, 154, 176, 178, 191) zur Generierung des Soft-Tokens durch Signierung zumindest eines aus einem ID-Token gelesenen Attributs und eines dem Secure Element zugeordneten öffentlichen Schlüssels sowie zur Übertragung des Soft-Tokens über die erste Verbindung an das elektronische Gerät und/oder über die zweite Verbindung an das Nutzer-Computersystem unter der Voraussetzung, dass die Prüfung eine Übereinstimmung des generierten und des empfangenen One Time Password ergeben hat,
und mit dem Secure Element, wobei das Secure Element und das Nutzer-Computersystem zur Herstellung einer lokalen Verbindung (184) zwischen dem Nutzer-Computersystem und dem Secure Element ausgebildet sind, wobei es sich bei der lokalen Verbindung um eine bidirektionale ad hoc-Verbindung handelt.

14. Datenverarbeitungssystem mit einem Computersystem nach Anspruch 13 und einem ID-Provider-Computersystem (136), wobei das ID-Provider-Computersystem
- Mittel (138) zum Empfang einer Attributspezifizierung von dem Dienst-Computersystem, wobei die Attributspezifizierung zumindest ein Attribut spezifiziert,
- Mittel (142, 144, 145, 146) zur Authentifizierung gegenüber dem ID-Token,
- Mittel (138, 145, 148) zum Lesen des zumindest einen Attributs aus dem ID-Token über eine geschützte Verbindung mit Ende-zu-Ende-Verschlüsselung,
aufweist, wobei das Lesen des zumindest einen Attributs voraussetzt, dass sich ein dem ID-Token zugeordneter Nutzer und das ID-Provider-Computersystem gegenüber dem ID-Token authentifiziert haben.

15. Datenverarbeitungssystem nach Anspruch 14, mit dem Secure Element, wobei das Secure Element einen geschützten Speicherbereich (186) aufweist, in dem ein geheimer Schlüssel des ersten Schlüsselpaars gespeichert ist.

## Claims

1. A method for generating a soft token, comprising the following steps:
- providing a secure element (172), wherein, in a protected storage area (186) of the secure element, a secret key of a first asymmetric cryptographic key pair is stored,
- establishing a first cryptographically secured connection (180) between an electronic device (174; 100) and a service computer system (150),
- transmitting a request for the generation of the soft token from the electronic device to the service computer system via the first connection,
- generating a one-time password on the basis of the receipt of the request by the service computer system,
- registering the one-time password as an identifier of the first connection by the service computer system,
- transmitting the one-time password from the service computer system to the electronic device via the first connection,
- issuing the one-time password via a user interface (194) of the electronic device,
- establishing a second cryptographically stored connection (182) between a user computer system (100; 174) and the service computer system,
- inputting the one-time password into the user computer system,
- transmitting the input one-time password from the user computer system to the service computer system via the second connection,
- checking, by means of the service computer system, whether the registered one-time password matches the one-time password received via the second connection, and, only if this is the case, reading at least one attribute stored in an ID token (106), generating the soft token by signing the at least one attribute and the public key of the first cryptographic key pair, transmitting the soft token via the first connection to the electronic device and/or transmitting the soft token via the second connection to the user computer system, wherein a local connection (184) is established between the user computer system and the secure element, wherein the local connection is a bidirectional ad hoc connection.

2. The method according to claim 1, wherein a public key of the first key pair is stored in a freely readable memory area (188) of the secure element, said method comprising the following further steps:
- transmitting the public key from the secure element to the electronic device via the local connection (184),
- transmitting the public key from the electronic device to the service computer system via the first cryptographically secured connection,
- encrypting the one-time password by means of the service computer system using the public key, wherein the encrypted one-time password is transmitted from the service computer system to the electronic device via the first connection,
- transmitting the encrypted one-time password from the electronic device to the secure element via the local connection,
- decrypting the one-time password by means of the secure element using the secret key of the first key pair, and
- transmitting the decrypted one-time password from the secure element to the electronic device via the local connection for output by the electronic device.

3. The method according to claim 1 or 2, wherein the service computer system has a first program component (176) for generating the one-time password, for encrypting the one-time password, and for generating the soft token, and a second program component (178) for receiving the one-time password from the user computer system, wherein the first connection is established between the electronic device and the first program component, and the second connection is established between the user computer system and the second program component, the method comprising the following further steps:
- transmitting the one-time password from the first program component to the second program component, wherein the second program component performs the check to determine whether the one-time password received from the first program component matches the one-time password received from the user computer system via the second connection,
- receiving the at least one attribute read out from the ID-token, by the second program component; and
- transmitting the at least one attribute from the second program component to the first program component.

4. The method according to any one of the preceding claims, wherein, in order to read out the at least one attribute from the ID token, the following further steps are performed:
- authenticating the user (102) with respect to the ID token;
- authenticating an ID-provider computer system (136) with respect to the ID token; and
- after successful authentication of the user and the ID-provider computer system with respect to the ID token, enabling read access of the ID-provider computer system to the at least one attribute stored in the ID token via a third connection and transmitting the at least one attribute from the ID-provider computer system to the service computer system, wherein the third connection is established between the ID token and the ID-provider computer system via the user computer system with end-to-end encryption.

5. The method according to claim 4, wherein the at least one attribute is signed by the ID-provider computer system and is transmitted to the service computer system via the user computer system.

6. The method according to claim 5, wherein the ID-provider computer system transmits the at least one attribute to the service computer system in the form of a SAML object.

7. The method according to any one of the preceding claims, wherein the soft token is generated by the service computer system by means of a blind signature or as a U-Prove token.

8. The method according to any one of the preceding claims, wherein a second asymmetric cryptographic key pair is associated with the soft token, wherein the secret key of the second key pair, encrypted with the public key of the first key pair, is stored in a memory (195) of the electronic device.

9. The method according to any one of the preceding claims, wherein the electronic device is designed as a computer system (100), in particular as a PC, and wherein the user computer system is designed as a mobile computer (174), in particular as a smartphone, wherein a public key of the first key pair is stored in a freely readable memory area (188) of the secure element, said method comprising the following further steps:
- transmitting the public key from the secure element to the mobile computer (174) via the local connection (184),
- transmitting the public key and the input one-time password from the mobile computer (174) to the service computer system via the second cryptographically secured connection.

10. The method according to any one of the preceding claims, wherein the one-time password is output by display of a machine-readable optical pattern on a display, and wherein the one-time password is input by mechanical capture of the optical pattern.

11. The method according to claim 10, wherein a pairing is carried out between the user computer system and the secure element in order to establish the wireless radio connection according to the Bluetooth standard.

12. A computer program product, in particular a digital storage medium, having executable program instructions for carrying out a method according to any one of the preceding claims.

13. A computer system for generating a soft token linked to a secure element (172), comprising:
- means (154, 176, 191) for establishing a first cryptographically secured connection (180) to an electronic device (174),
- means (154, 176, 191) for receiving a request for the generation of the soft token from the electronic device via the first connection,
- means (154, 176) for generating a one-time password on the basis of the receipt of the request,
- means (154, 176, 191) for transmitting the one-time password to the electronic device via the first connection,
- means (152, 154, 178) for establishing a second cryptographically secured connection (182) to a user computer system (100),
- means (152, 154, 178) for receiving the one-time password from the user computer system via the second connection,
- means (154, 178) for checking whether the generated one-time password matches the received one-time password,
- means (152, 154, 176, 178, 191) for generating the soft token by signing at least one attribute, which has been read out from an ID token, and a public key associated with the secure element, and for transmitting the soft token to the electronic device via the first connection and/or to the user computer system via the second connection under the condition that the check has confirmed that the generated one-time password and the received one-time password match,
- and comprising the secure element, wherein the secure element and the user computer system are designed to establish a local connection (184) between the user computer system and the secure element, wherein the local connection is a bidirectional ad hoc connection.

14. A data processing system comprising a computer system according to claim 13 and an ID-provider computer system (136), wherein the ID-provider computer system comprises:
- means (138) for receiving an attribute specification from the service computer system, wherein the attribute specification specifies at least one attribute,
- means (142, 144, 145, 146) for authentication with respect to the ID token, and
- means (138, 145, 148) for reading out the at least one attribute from the ID token via a protected connection having end-to-end encryption,
wherein the reading of the at least one attribute presupposes that a user associated with the ID token and the ID-provider computer system have been authenticated with respect to the ID token.

15. The data processing system according to claim 14, comprising the secure element, wherein the secure element has a protected memory area (186), in which a secret key of the first key pair is stored.

## Revendications

1. Procédé de génération d'un jeton logiciel avec les étapes suivantes :
- fourniture d'un élément de sécurité (172), où une clé privée d'une première paire de clés cryptographiques asymétrique est stockée dans une région de mémoire (186) sécurisée de l'élément de sécurité,
- établissement d'une première connexion (180) sécurisée de manière cryptographique entre un appareil électronique (174 ; 100) et un système informatique de service (150),
- transmission d'une requête pour la génération du jeton logiciel de l'appareil électronique vers le système informatique de service par le biais de la première connexion,
- génération d'un mot de passe à usage unique en raison de la réception de la requête par le système informatique de service,
- enregistrement du mot de passe à usage unique en tant qu'identificateur de la première connexion par le système informatique de service,
- transmission du mot de passe à usage unique du système informatique de service vers l'appareil électronique par le biais de la première connexion,
- édition du mot de passe à usage unique par le biais d'une interface d'utilisateur (194) de l'appareil électronique,
- établissement d'une deuxième connexion (182) sécurisée de manière cryptographique entre un système informatique d'utilisateur (100 ; 174) et le système informatique de service,
- introduction du mot de passe à usage unique dans le système informatique d'utilisateur,
- transmission du mot de passe à usage unique introduit à partir du système informatique d'utilisateur au système informatique de service par le biais de la deuxième connexion,
- vérification par le système informatique de service si le mot de passe à usage unique correspond au mot de passe à usage unique reçu par le biais de la deuxième connexion et, uniquement si c'est le cas, lecture d'au moins un attribut stocké dans un jeton d'identité (106), génération du jeton logiciel de l'au moins un attribut et de la clé publique de la première paire de clés cryptographiques, transmission du jeton logiciel par le biais de la première connexion à l'appareil électronique et/ou transmission du jeton logiciel par le biais de la deuxième connexion au système informatique d'utilisateur, une connexion locale (184) étant établie entre le système informatique d'utilisateur et l'élément de sécurité, où il s'agit d'une connexion bidirectionnelle et ad hoc dans le cas de la connexion locale.

2. Procédé selon la revendication 1, dans lequel une clé publique de la première paire de clés est stockée dans une région de mémoire (188) lisible librement de l'élément de sécurité, avec les autres étapes suivantes :
- transmission de la clé publique de l'élément de sécurité vers l'appareil électronique par le biais de la connexion locale (184),
- transmission de la clé publique de l'appareil électronique vers le système informatique de service par le biais de la première connexion sécurisée de manière cryptographique,
- cryptage du mot de passe à usage unique par le système informatique de service avec la clé publique, le mot de passe à usage unique étant transmis du système informatique de service à l'appareil électronique par le biais de la première connexion,
- transmission du mot de passe à usage unique crypté de l'appareil électronique vers l'élément de sécurité par le biais de la connexion locale,
- décryptage du mot de passe à usage unique par l'élément de sécurité avec la clé privée de la première paire de clés,
- transmission du mot de passe à usage unique décrypté de l'élément de sécurité vers l'appareil électronique par le biais de la connexion locale en vue de l'édition par l'appareil électronique.

3. Procédé selon la revendication 1 ou la revendication 2, dans lequel le système informatique de service présente une première composante de programme (176) pour la génération du mot de passe à usage unique, destiné au cryptage du mot de passe à usage unique et à la génération du jeton logiciel, ainsi qu'une deuxième composante de programme (178) pour la réception du mot de passe à usage unique provenant du système informatique d'utilisateur, où la première connexion entre l'appareil électronique et la première composante de programme et la deuxième connexion entre le système informatique d'utilisateur et la deuxième composante de programme sont établies, avec les autres étapes suivantes :
- transmission du mot de passe à usage unique de la première composante de programme vers la deuxième composante de programme, où la deuxième composante de programme entreprend la vérification si le mot de passe à usage unique reçu de la première composante de programme correspond avec le mot de passe à usage unique reçu du système informatique d'utilisateur par le biais de la deuxième connexion,
- réception de l'au moins un attribut lu à partir du jeton d'identification par la deuxième composante de programme,
- transmission de l'au moins un attribut de la deuxième composante de programme vers la première composante de programme.

4. Procédé selon l'une des revendications précédentes, dans lequel, pour la lecture de l'au moins un attribut à partir du jeton d'identification, les autres étapes suivantes sont exécutées :
- authentification de l'utilisateur (102) vis-à-vis du jeton d'identité ;
- authentification d'un système informatique de fournisseur d'identifiant (136) vis-à-vis du jeton d'identité,
- après une authentification réussie de l'utilisateur et du système informatique de fournisseur d'identifiant vis-à-vis du jeton d'identité, accès en lecture du système informatique de fournisseur d'identifiant pour l'au moins un attribut stocké dans le jeton d'identité par le biais d'une troisième connexion, transmission de l'au moins un attribut du système informatique de fournisseur d'identifiant vers le système informatique de service, où la troisième connexion est établie entre le jeton d'identité et le système informatique de fournisseur d'identifiant par le biais du système informatique d'utilisateur avec un cryptage de bout en bout.

5. Procédé selon la revendication 4, dans lequel l'au moins un attribut est signé par le système informatique de fournisseur d'identifiant et est transmis au système informatique de service par le biais du système informatique d'utilisateur.

6. Procédé selon la revendication 5, dans lequel le système informatique de fournisseur d'identifiant transmet l'attribut sous forme d'un objet SAML au système informatique de service.

7. Procédé selon l'une des revendications précédentes, dans lequel le jeton logiciel est généré par le système informatique de service par une signature aveugle ou en tant que jeton U-Prove.

8. Procédé selon l'une des revendications précédentes, dans lequel une deuxième paire de clés cryptographiques asymétrique est associée au jeton logiciel, où la clé privée de la deuxième paire de clés est stockée cryptée avec la clé publique de la première paire de clés dans une mémoire (195) de l'appareil électronique.

9. Procédé selon l'une des revendications précédentes, dans lequel l'appareil électronique est conçu sous forme de système informatique (100), notamment sous forme de PC et dans lequel le système informatique d'utilisateur est conçu sous forme d'ordinateur mobile (174), notamment sous forme de Smartphone, dans lequel une clé publique de la première paire de clés est stockée dans une région de mémoire (188) lisible de manière libre de l'élément de sécurité, avec les autres étapes suivantes :
- transmission de la clé publique de l'élément de sécurité vers l'ordinateur mobile (174) par le biais d'une connexion locale (184),
- transmission de la clé publique et du mot de passe à usage unique introduit à partir de l'ordinateur mobile (174) vers le système informatique de service par le biais de la deuxième connexion sécurisée de manière cryptographique.

10. Procédé selon l'une des revendications précédentes, dans lequel l'édition du mot de passe à usage unique par l'affichage d'un modèle optique lisible par machine a lieu sur un affichage et dans lequel l'introduction du mot de passe à usage unique a lieu par une saisie par machine du modèle optique.

11. Procédé selon la revendication 10, dans lequel, pour l'établissement d'une connexion radio sans fil selon la norme Bluetooth, il y a un appariement entre le système informatique d'utilisateur et l'élément de sécurité.

12. Produit-programme informatique, en particulier, support de stockage numérique, avec des instructions de programme exécutables pour la réalisation d'un procédé selon l'une des revendications précédentes.

13. Système informatique destiné à la génération d'un jeton logiciel relié à un élément de sécurité (172) doté :
- de moyens (154, 176, 191) pour l'établissement d'une première connexion (180) sécurisée de manière cryptographique vers un appareil électronique (174),
- de moyens (154, 176, 191) pour la réception d'une requête pour la génération du jeton logiciel à partir de l'appareil électronique par le biais de la première connexion,
- de moyens (154, 176) pour la génération d'un mot de passe à usage unique en raison de la réception de la requête,
- de moyens (154, 176, 191) pour la transmission du mot de passe à usage unique à l'appareil électronique par le biais de la première connexion,
- de moyens (152, 154, 178) pour l'établissement d'une deuxième connexion (182) sécurisée de manière cryptographique vers un système informatique d'utilisateur (100),
- de moyens (152, 154, 178) pour la réception du mot de passe à usage unique par le système informatique d'utilisateur par le biais de la deuxième connexion,
- de moyens (154, 178) pour la vérification si le mot de passe à usage unique correspond au mot de passe à usage unique reçu,
- de moyens (152, 154, 176, 178, 191) pour la génération du jeton logiciel par la signature au moins d'un attribut lu à partir du jeton d'identification et d'une clé publique associée à l'élément de sécurité, ainsi que pour la transmission du jeton logiciel à l'appareil électronique par le biais de la première connexion, et/ou au système informatique d'utilisateur par le biais de la deuxième connexion, à la condition que la vérification a donné lieu à une concordance des mots de passe à usage unique généré et reçu,
et avec l'élément de sécurité, où l'élément de sécurité et le système informatique d'utilisateur sont conçus pour l'établissement d'une connexion locale (184) entre le système informatique d'utilisateur et l'élément de sécurité, où il s'agit d'une connexion bidirectionnelle ad hoc dans le cas de la connexion locale.

14. Système de traitement de données doté d'un système informatique selon la revendication 13 et d'un système informatique de fournisseur d'identifiant (136), le système informatique de fournisseur d'identifiant présentant
- des moyens (138) pour la réception d'une spécification d'attribut à partir du système informatique de service, la spécification d'attribut spécifiant au moins un attribut,
- des moyens (142, 144, 145, 146) pour l'authentification vis-à-vis du jeton d'identification,
- des moyens (138, 145, 148) pour la lecture de l'au moins un attribut à partir du jeton d'identification par le biais de la connexion sécurisée par un cryptage de bout en bout,
où la lecture de l'au moins un attribut implique que l'utilisateur associé au jeton d'identification et le système informatique de fournisseur d'identifiant se soient authentifiés vis-à-vis du jeton d'identification.

15. Système de traitement de données selon la revendication 14, doté d'un élément de sécurité, l'élément de sécurité présentant une région de mémoire (186) sécurisée dans laquelle est stockée une clé privée de la première paire de clés.
